# EUROPEAN PATENT SPECIFICATION

(11) **EP 0 960 679 B1**
(45) Date of publication and mention of the grant of the patent: **10.04.2002**
(21) Application number: 99850072.2
(22) Date of filing: 04.05.1999
(51) Int. Cl.: B23D 61/12

(54) **Bandsaw blade with straight teeth and set teeth**
Bandsägeblatt mit geraden Zähnen sowie geschränkten Zähnen
Lame de scie à ruban à dents droites et dents avoyées

(30) Priority: 26.05.1998 SE 9801839
(43) Date of publication of application: 01.12.1999
(73) Proprietor: Kapman AB, 811 81 Sandviken (SE)
(72) Inventor: Hellbergh, Hakan, 531 53 Lidköping (SE)
(74) Representative: Johansson Webjörn, Ingmari

(56) References cited:
- DE-A- 4 324 411
- FR-A- 523 586
- FR-A- 1 406 673
- US-A- 5 603 252
- "DoALL multi-pitch band saw blades" MACHINERY AND PRODUCTION ENGINEERING., 19 October 1977 (1977-10-19), pages 384-385, XP002112818 MACHINERY PUBLISHING CO.LTD. BURGESS HILL., GB ISSN: 0024-919X
- PATENT ABSTRACTS OF JAPAN vol. 016, no. 274 (M-1267), 19 June 1992 (1992-06-19) & JP 04 069112 A (MATSUKUSUTON KK), 4 March 1992 (1992-03-04)

## Description

### Background

Bandsaw blades for cutting of metal have long been made with differences in height, pitch distance and setting between the teeth, which has proven to be an efficient way to avoid vibrations and to get smoother cut surfaces especially when cutting large diameter solid sections. One known way to make such a saw blade is to arrange the teeth in recurring groups with variable pitch distances between the teeth, the length of this group should preferably be at least as great as the thickness of the material to be cut. It has also been shown that to achieve best results it is important to have very good repeatability of the setting, not only the amount and angle of setting, but also the angle of twist the of the tooth during setting. One known way to do this is to use tools large enough for punching, grinding and setting the whole group of teeth at a time, but for long groups that requires expensive tooling. Setting the teeth individually is difficult to do with precision, since the twist and the spring-back after setting are much influenced by the distance to and setting of the adjoining teeth, which may vary within the recurring group.

FR-1.406.673 discloses a bandsaw blade according to the preamble of claim 1.

The present invention concerns a bandsaw blade with teeth arranged for easy precision setting and limited tooling size, even for saw blades with large teeth and long average pitch distance.

### Description

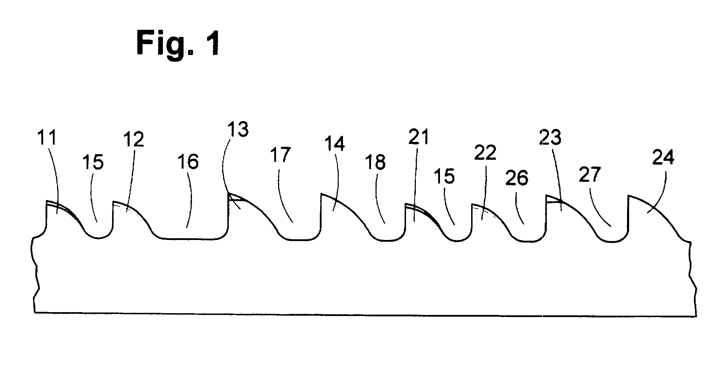

A bandsaw blade according to the invention is described with reference to the figure 1 which shows part of a saw blade.

According to the invention, all set teeth are arranged in pairs, one set to the right and one set to the left, with equal and relatively short distance between the teeth in the pair. Other straight teeth are arranged between the pairs and separated from the pairs by distances which are longer than the distance within the pair, in order to reduce the influence on the setting. To produce the effect of a long recurring group, the distances between straight teeth or from straight teeth to the set pair may be varied, randomly or according to a predetermined rule.

As shown in figure 1, the saw blade is provided with set teeth, half of them (11,21) set to the right and half of them (12,22) set to the left. The set teeth occur in pairs of each one set to the right and one set to the left, and the distance (15) between the teeth of each pair of set teeth is equal. This allows simultaneous setting of both set teeth of the pair with one set of hammers and anvils after aligning the tools by indexing on the first tooth (11,21) of the pair. The setting tools will then also be aligned with the second tooth (12,22) of the pair since their distance (15) is constant and equal.

Preferably, the setting direction order left-right or right-left between the teeth of each pair should be the same, since that allows a more even distribution of cutting depth for the set teeth.

Between the pairs of set teeth are provided one, two or three straight teeth (13,14,23,24), which should be higher than the set teeth to ensure a smooth cut even at the beginning since the first chips of each cut are then produced without any lateral forces. Preferably, there should be a leading highest straight tooth (13,23) with large chamfers followed by a slightly lower straight tooth (14,24) with smaller chamfers or no chamfers.

Since the influence of adjoining teeth upon the setting decreases sharply with the distance, the straight teeth should be located at a distance (16,18,26) from the nearest set teeth exceeding the distance (15) between the set teeth of each pair. The distance (17,27) between the straight teeth does not influence the setting precision but should leave enough gullet area for the chips. To achieve the best vibration reduction corresponding to long recurring tooth groups, the distances (16,18,26) between set and straight teeth should be varied, which can be done by making the punching or grinding tools produce flat-bottomed gullets which may overlap to some extent, which may be varied according to a predetermined scheme, or randomly.

The chamfers on leading straight teeth are ground with indexing on those teeth, and is not influenced or disturbed by distances to other teeth.

## Claims

1. Bandsaw blade for sawing of metal, comprising straight teeth (13,14) and set teeth (11,12), the set teeth having equal height and occurring in pairs with the same equal distance (15) between the teeth in each pair, **characterized by** the distance (16,18) from any set tooth to an adjacent straight tooth having values which are different and larger than the distance between the set teeth.

2. Bandsaw blade according to claim 1, **characterized by** having from one to three straight teeth (13,14) between each two pairs of set teeth.

3. Bandsaw blade according to claim 2, **characterized by** at least a leading straight tooth (13) being higher than the set teeth.

4. Bandsaw blade according to claim 3, **characterized by** at least a leading straight tooth (13) having chamfers on both sides.

## Patentansprüche

1. Bandsägeblatt zum Sägen von Metall, mit geraden Zähnen (13, 14) und geschränkten Zähnen (11, 12), wobei die geschränkten Zähne gleiche Höhe haben und in Paaren auftreten mit demselben gleichen Abstand (15) zwischen den Zähnen in jedem Paar, **dadurch gekennzeichnet, daß** der Abstand (16, 18) von jedem geschränkten Zahn zu einem benachbarten geraden Zahn Werte hat, die unterschiedlich und größer sind als der Abstand zwischen den geschränkten Zähnen.

2. Bandsägeblatt nach Anspruch 1, **dadurch gekennzeichnet, daß** von einem bis drei gerade Zähne (13, 14) zwischen jedem Paar von Beschränkten Zähnen vorgesehen ist.

3. Bandsägeblatt nach Anspruch 2, **dadurch gekennzeichnet, daß** mindestens ein vorderer gerader Zahn (13) höher ist als die geschränkten Zähne.

4. Bandsägeblatt nach Anspruch 3, **dadurch gekennzeichnet, daß** mindestens ein vorderer gerader Zahn (13) Abrundungen auf beiden Seiten hat.

## Revendications

1. Lame de scie pour scier du métal, comprenant des dents droites (13, 14) et des dents avoyées (11, 12), les dents avoyées étant de même hauteur et apparaissant par paires avec une même égale distance (15) entre les dents de chaque paire, **caractérisée par le fait que** les distances (16, 18) de toute dent avoyée à une dent droite adjacente ont des valeurs qui sont différentes et supérieures à la distance entre les dents avoyées.

2. Lame de scie selon la revendication 1, **caractérisée par le fait qu'**elle comporte de une à trois dents droites (13, 14) entre deux paires quelconques de dents avoyées.

3. Lame de scie selon la revendication 2, **caractérisée par le fait qu'**au moins une dent droite antérieure (13) est plus haute que les dents avoyées.

4. Lame de scie selon la revendication 3, **caractérisée par le fait qu'**au moins une dent droite antérieure (13) comporte des chanfreins des deux côtés.
